# EUROPEAN PATENT APPLICATION

(11) **EP 4 700 253 A1**
(43) Date of publication of application: **25.02.2026**
(21) Application number: 24792610.8
(22) Date of filing: 12.04.2024
(51) Int. Cl.: F16C 11/06

(54) **BALL JOINT AND METHOD FOR MANUFACTURING BALL JOINT**

(30) Priority: 21.04.2023 JP 2023069977
(71) Applicant: Somic Management Holdings Inc., Sumida-ku Tokyo 130-0004 (JP)
(72) Inventor: KASHIWAGI Shinya, Hamamatsu-shi, Shizuoka 435-8560 (JP)
(74) Representative: Stöckeler, Ferdinand
(86) International application number: PCT/JP2024/014829
(87) International publication number: WO 2024/219335

(57) **Abstract**

Provided are a ball joint and a method for manufacturing the ball joint, which can improve the stiffness of a stud portion. A ball joint 100 includes a stud portion 110 and a housing 120. The stud portion 110 includes a coupling portion 111 to be coupled to a coupling target 10, a flange-shaped receiving portion 115 on which the coupling target 10 is to be located, and a ball portion 114 having a spherical surface. The coupling portion 111 is formed with an external thread portion 112 onto which an attachment nut 12 is to be fastened. The flange-shaped receiving portion 115 is formed so as to project outward in a flange shape in a radial direction from the coupling portion 111. A surface hardening layer 118 having a hardened surface layer is formed on a boundary portion 117 between the coupling portion 111 and the flange-shaped receiving portion 115.

## Description

### TECHNICAL FIELD

The present invention relates to a ball joint used for a suspension mechanism or a steering mechanism in a vehicle and a method for manufacturing the ball joint.

### BACKGROUND ART

Conventionally, a ball joint has been used for a suspension mechanism (suspension device) or a steering mechanism (steering device) in a vehicle such as an automobile to movably couple shaft-shaped components to each other. For example, Patent Literature 1 below discloses a ball joint configured such that a ball portion formed at one end portion of a bar-shaped stud portion is slidably held in a bottomed cylindrical housing. In this case, the stud portion is formed with an external thread to which a coupling target such as a suspension or a stabilizer is to be coupled. In addition, a flange portion projecting in a flange shape is formed between the external thread and the ball portion. The coupling target is located on this flange portion.

### CITATION LIST

### PATENT LITERATURE

PATENT LITERATURE 1: JP-A-2020-98011

### SUMMARY OF INVENTION

However, in the ball joint described in Patent Literature 1 above, in a case where the coupling target is coupled to the coupling portion formed with the external thread, stress is likely to be concentrated on a boundary portion between the coupling portion and the flange portion. This causes a problem that it is difficult to ensure stiffness.

The present invention copes with the above-described problem. That is, an object of the present invention is to provide a ball joint capable of improving the stiffness of a stud portion and a method for manufacturing the ball joint.

In order to achieve the object described above, the present invention provides a ball joint including: a stud portion having a coupling portion to be coupled to a coupling target, formed in a bar shape, and having a flange-shaped receiving portion which projects in a flange shape between the stud portion and a ball portion formed with a spherical surface, and on which the coupling target is to be located; and a housing slidably housing the ball portion of the stud portion, in which a surface hardening layer is formed on a boundary portion between the coupling portion and the flange-shaped receiving portion.

According to this configuration, in the ball joint, the surface hardening layer is formed on the boundary portion between the coupling portion and the flange-shaped receiving portion. Thus, the stiffness (abrasion resistance or fatigue strength) of the boundary portion can be improved. Moreover, the ball joint can improve the stiffness of the boundary portion between the coupling portion and the flange-shaped receiving portion. This can decrease the outer diameter of the entirety of the stud portion and reduce the stud portion in size. In addition, a recessed clearance is easily formed at the boundary portion. Thus, adhesion to the coupling target can be improved.

Another feature of the present invention is that in the ball joint, the surface hardening layer includes a shot peening mark.

According to this configuration, in the ball joint, the surface hardening layer includes the shot peening mark. Thus, the surface hardening layer can be easily formed.

Still another feature of the present invention is that in the ball j oint, the boundary portion is formed so as to be recessed inward of the stud portion, and the surface hardening layer is formed on the surface of the recessed boundary portion.

According to this configuration, the surface hardening layer is formed on the recessed boundary portion of the ball joint. Thus, the stiffness of the stud portion can be ensured while the adhesion to the coupling target is improved.

Still another feature of the present invention is that in the ball joint, a surface hardening layer is further formed on an outer peripheral portion of the flange-shaped receiving portion.

According to this configuration, the surface hardening layer is formed on the outer peripheral portion of the flange-shaped receiving portion of the ball joint. Thus, an outer edge portion of the flange-shaped receiving portion bites into the coupling target so that deformation of the outer peripheral portion upon coupling can be reduced. Thus, coupling force can be enhanced. In this case, the surface hardening layer in the ball joint may include a shot peening mark. With this configuration, coupling force between the flange-shaped receiving portion and the coupling target can be improved.

The present invention can be implemented not only as the invention relating to the ball joint but also as the invention relating to a method for manufacturing the ball joint.

Specifically, the method for manufacturing the ball joint is a method for manufacturing a ball joint which includes a stud portion having a coupling portion to be coupled to a coupling target, formed in a bar shape, and having a flange-shaped receiving portion which projects in a flange shape between the stud portion and a ball portion formed with a spherical surface, and on which the coupling target is to be located, and a housing slidably housing the ball portion of the stud portion, the method being capable of including: a surface hardening layer formation step of forming a surface hardening layer on a boundary portion between the coupling portion and the flange-shaped receiving portion. According to this configuration, it can be expected that the method for manufacturing the ball joint provides features and effects similar to those of the above-described ball joint.

In this case, in the method for manufacturing the ball joint, the surface hardening layer formation step is preferably shot peening. According to this configuration, it can be expected that the method for manufacturing the ball joint provides features and effects similar to those of the above-described ball joint.

In this case, the method for manufacturing the ball joint includes a thread portion molding step of forming an external thread at the coupling portion. The surface hardening layer formation step is performed before the thread portion molding step. According to this configuration, in the surface hardening layer formation step of the method for manufacturing the ball joint, the external thread formed by shot peening can be formed. This can smooth asperities of the surface of the formed external thread.

In this case, more preferably, in the surface hardening layer formation step of the method for manufacturing the ball joint, a surface hardening layer is also formed on an outer peripheral portion of the flange-shaped receiving portion. According to this configuration, it can be expected that the method for manufacturing the ball joint provides features and effects similar to those of the above-described ball joint.

### BRIEF DESCRIPTION OF DRAWINGS

Fig. 1 is a partially-broken sectional view schematically showing a longitudinal section of a ball joint according to one embodiment of the present invention.
Fig. 2 is a partially-enlarged sectional view showing details of a surface hardening layer formation state in a dashed circle 2 shown in Fig. 1.
Fig. 3 is a flowchart showing each step of a process of manufacturing a stud portion forming the ball joint shown in Fig. 1.
Fig. 4 is a partially-enlarged sectional view showing details of a surface hardening layer formation state according to a modification of the present invention.
Fig. 5 is a partially-enlarged sectional view showing details of a surface hardening layer formation state according to another modification of the present invention.
Fig. 6 is a partially-enlarged sectional view showing details of a surface hardening layer formation state according to still another modification of the present invention.

### DESCRIPTION OF EMBODIMENTS

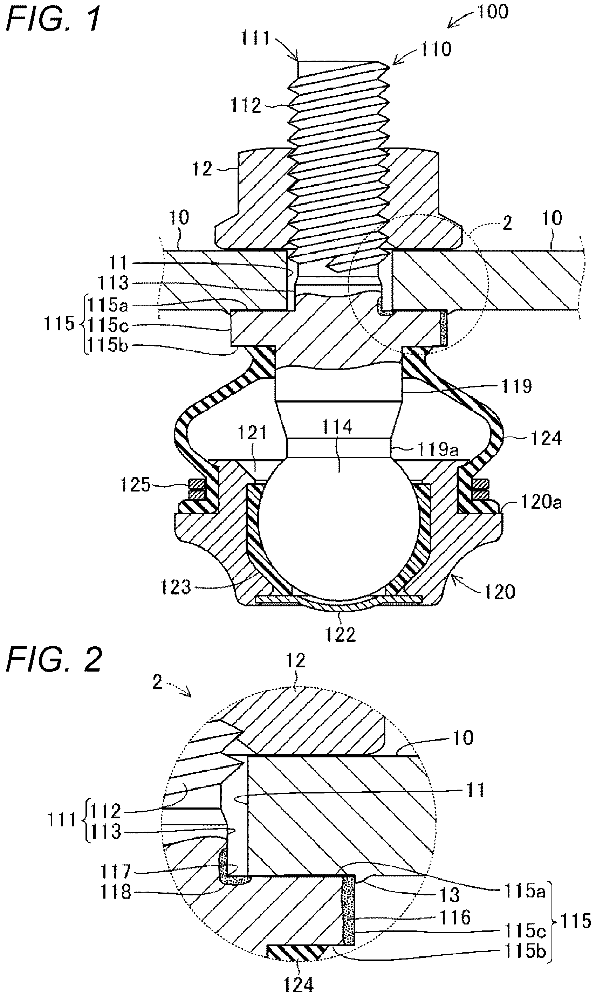

Hereinafter, one embodiment of a ball joint according to the present invention will be described with reference to the drawings. Fig. 1 is a partially-broken sectional view schematically showing a longitudinal section of a ball joint 100 according to the present invention. Note that in each figure taken as a reference in the present specification, some components are schematically illustrated, for example exaggeratedly illustrated, for the sake of easy understanding of the present invention. Thus, for example, the dimensions of components or the ratios therebetween may vary.

### (Configuration of Ball Joint 100)

The ball joint 100 is a joint member coupling components to each other while allowing a change in angles between the components in a suspension mechanism (suspension device) or a steering mechanism (steering device) employed for a vehicle such as an automobile. In the present embodiment, a member forming the suspension mechanism or the steering mechanism and directly coupled to the ball joint 100 will be referred to as a coupling target 10. The coupling target 10 is formed in a plate shape. In addition, the coupling target 10 is formed with a through-hole 11 for attaching the ball joint 100. The ball joint 100 mainly includes a stud portion 110, a housing 120, a ball seat 123, and a dust cover 124.

The stud portion 110 is a component for movably coupling the coupling target 10 to the housing 120. The stud portion 110 is formed of a metal member in a round bar shape. A coupling portion 111 is formed at one end portion (on the upper side in the figure) of the stud portion 110. In addition, a ball portion 114 is formed at the other end portion (on the lower side in the figure).

The coupling portion 111 is a portion penetrating the through-hole 11 of the coupling target 10. The coupling portion 111 mainly includes an external thread portion 112 and an unthreaded portion 113. The external thread portion 112 is a portion onto which an attachment nut 12 is screwed in a state of the coupling portion 111 penetrating the through-hole 11 of the coupling target 10. The external thread portion 112 includes an external thread onto which the attachment nut 12 is screwed. The coupling portion 111 is formed from the one end portion toward the other end portion side of the stud portion 110.

The unthreaded portion 113 is a portion disposed in the through-hole 11 of the coupling target 10. The unthreaded portion 113 is formed in a round bar shape with a diameter smaller than that of the through-hole 11. The unthreaded portion 113 is formed with no external thread. In the present embodiment, the unthreaded portion 113 is formed with such an outer diameter that a gap is formed with the inner peripheral surface of the through-hole 11. In addition, the unthreaded portion 113 is formed with a length shorter than the length (depth) of the through-hole 11.

The ball portion 114 is a portion sliding in the ball seat 123. The ball portion 114 is formed with a smooth raised spherical surface in order to smoothly slide on the inner peripheral surface of the ball seat 123. In order to ensure smooth slide on the ball seat 123, a smooth spherical surface is formed by grinding on the surface of the ball portion 114. A flange-shaped receiving portion 115 is formed between the coupling portion 111 and the ball portion 114.

The flange-shaped receiving portion 115 is a portion on which the coupling target 10 is located. The flange-shaped receiving portion 115 is formed in a discoid shape projecting outward in a flange shape in the radial direction of the stud portion 110. As shown in Fig. 2, the flange-shaped receiving portion 115 mainly has a coupling-portion-side surface 115a, a ball-portion-side surface 115b, and an outer peripheral portion 115c.

The coupling-portion-side surface 115a is a portion formed on the coupling portion 111 side and receiving the coupling target 10. The coupling-portion-side surface 115a is formed in a flat plate annular shape in plan view. The ball-portion-side surface 115b is a surface (surface on the opposite side of the coupling-portion-side surface) formed on the ball portion 114 side. The ball-portion-side surface 115b is formed in a flat plate annular shape in bottom view. The outer peripheral portion 115c is an end surface of an outermost peripheral portion of the flange-shaped receiving portion 115. The outer peripheral portion 115c is formed so as to extend in an annular shape in the circumferential direction of the flange-shaped receiving portion 115. The outer peripheral portion 115c is formed with a surface hardening layer 116.

The surface hardening layer 116 is a portion for enhancing the stiffness of the outer peripheral portion 115c. The surface hardening layer 116 is formed with a hardness higher than the hardness of an inner portion with respect to the surface hardening layer 116. In the present embodiment, the surface hardening layer 116 includes a shot peening mark (group of numerous recesses). Note that the depth and hardness of the surface hardening layer 116 are determined as necessary according to the specifications of the ball joint 100. Moreover, a surface hardening layer 118 is also formed on a boundary portion 117 between the flange-shaped receiving portion 115 and the stud portion 110.

The boundary portion 117 is a portion at a boundary between the flange-shaped receiving portion 115 and the stud portion 110. The boundary portion 117 is a circular ring-shaped portion extending in the circumferential direction of the stud portion 110. In the present embodiment, the boundary portion 117 includes a portion at which the flange-shaped receiving portion 115 and the stud portion 110 cross substantially at right angle and a peripheral portion thereof.

Similarly to the surface hardening layer 116, the surface hardening layer 118 is a portion for enhancing the stiffness of the boundary portion 117. The surface hardening layer 118 is formed with a higher hardness than the hardness of an inner portion with respect to the surface hardening layer 118. In the present embodiment, the surface hardening layer 118 includes the same shot peening mark (group of numerous recesses) as that of the surface hardening layer 116. Note that the depth and hardness of the surface hardening layer 118 are determined as necessary according to the specifications of the ball joint 100.

A ball support portion 119 extending in a round bar shape is formed between the flange-shaped receiving portion 115 and the ball portion 114. In this case, the ball support portion 119 is formed with a constricted portion 119a with a narrowed outer diameter. The ball portion 114 is connected to the ball support portion 119 via the constricted portion 119a.

The housing 120 is a portion holding the ball portion 114. The housing 120 is formed substantially in a cylindrical shape in such a manner that nonferrous metal such as a steel material or an aluminum material is casted or forged. In this case, the housing 120 is formed at a tip end portion of an arm portion extending in a bar shape in order to be coupled to each component of the not-shown steering mechanism or suspension mechanism.

The housing 120 is formed with an opening 121 opened upward in the figure in one end portion (upper end portion in the figure) of a cylindrical body. In addition, the other end portion (lower end portion in the figure) is closed with a plug 122. The plug 122 is a plate-shaped member closing the other end portion of the housing 120 formed in the cylindrical shape. The plug 122 is formed of a steel member substantially in a discoid shape with a recessed center portion. In the housing 120, the ball seat 123 is housed as a bearing seat.

The ball seat 123 is a component turnably and slidably holding, in the housing 120, the ball portion 114 formed as the stud portion 110. The ball seat 123 is made of a synthetic resin material (for example, PEEK resin) in a cup shape having a substantially U-shaped longitudinal sectional shape. In order to ensure lubricity between the inner peripheral surface of the ball seat 123 and the outer peripheral surface of the ball portion 114, the upper opening and lower opening of the ball seat 123 are applied with not-shown grease. An outer peripheral portion of the housing 120 is formed with a cover receiving portion 120a projecting outward in the radial direction of the housing 120. The dust cover 124 is held on the cover receiving portion 120a.

The dust cover 124 is a component for preventing a foreign substance from entering the housing 120. The dust cover 124 is made of an elastically-deformable rubber material or a soft synthetic resin material substantially in a cylindrical shape with a bulging center portion. One (on the upper side in the figure) opening of the dust cover 124 is elastically fitted onto a ball-portion-114-side base portion of the flange-shaped receiving portion 115 of the stud portion 110. In addition, the other opening is fitted onto the cover receiving portion 120a of the outer peripheral portion of the housing 120 via a metal circlip 125.

### (Manufacturing of Ball Joint 100)

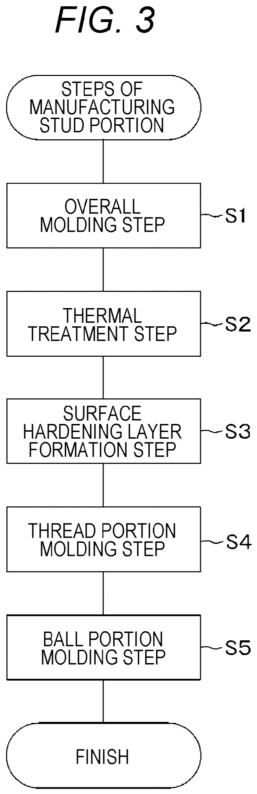

Next, manufacturing of the ball joint 100 configured as described above will be described. Note that in the description of steps of manufacturing the ball joint 100, a process of manufacturing the stud portion 110, which directly relates to the present invention, will be mainly described with reference to Fig. 3. Manufacturing steps which do not directly relate to the present invention will be omitted as necessary.

First, a worker manufactures the stud portion 110. The stud portion 110 is manufactured mainly through an overall molding step (S1), a thermal treatment step (S2), a surface hardening layer formation step (S3), a thread portion molding step (S4), and a ball portion molding step (S5). Specifically, in the overall molding step, the worker forges a round bar member made of carbon steel or alloy steel with a not-shown forging machine. In this manner, the coupling portion 111, the unthreaded portion 113, the flange-shaped receiving portion 115, the ball support portion 119, and the ball portion 114 are integrally molded.

In such forging, the stud portion 110 is molded little by little in such a manner that the round bar member is plastically deformed in a stepwise manner. In this case, the ball portion 114 and ball support portion 119 of the stud portion 110 are machined by so-called rough molding with a predetermined machining allowance. Note that needless to say, this overall molding step may be performed by cutting instead of or in addition to forging.

Next, the worker performs the thermal treatment step. Specifically, the worker applies thermal treatment including quenching and tempering to a semi-finished product of the stud portion 110 molded in the overall molding step. This improves the hardness of the entirety of the stud portion 110.

Next, the worker performs the surface hardening layer formation step. Specifically, the worker masks, in a state of the outer peripheral portion 115c of the flange-shaped receiving portion 115 and the boundary portion 117 in the semi-finished product of the stud portion 110 subjected to the thermal treatment being exposed, other portions (coupling-portion-side surface 115a and ball-portion-side surface 115b) with a masking tape (not shown). Thereafter, shot peening (also called "shot blast") is performed on the entirety of the stud portion 110.

In this manner, the worker can machine and harden each surface layer of the coupling portion 111, the ball portion 114, the outer peripheral portion 115c, the boundary portion 117, and the ball support portion 119 which are portions other than the masked portions of the stud portion 110. Note that machining specifications such as a median diameter in shot peening are determined as necessary according to the specifications of the ball joint 100.

Next, the worker performs the thread portion molding step. Specifically, the worker rolls the semi-finished product of the stud portion 110 with a not-shown thread rolling machine. In this manner, the external thread is formed at the coupling portion 111. Accordingly, the worker can form the external thread portion 112 at part of the coupling portion 111 of the semi-finished product of the stud portion 110. In this case, the rough surface formed by shot peening before formation of the external thread is smoothed by rolling at the external thread portion 112.

Next, the worker performs the ball portion molding step. Specifically, the worker cuts, including the ball support portion 119, the outer peripheral surface of the ball portion 114 of the semi-finished product of the stud portion 110 with a not-shown machine tool such as a numerical control (NC) lathe. Moreover, the worker finishes the ball portion 114 by grinding the ball portion 114 with a not-shown grinding machine. By these steps, the worker can manufacture the stud portion 110.

Next, the worker molds the housing 120. Specifically, the worker prepares each of the plug 122 and the ball seat 123 in addition to the stud portion 110. In this case, the plug 122 is formed in the discoid shape in advance by pressing. Moreover, the ball seat 123 is formed in the cylindrical shape in advance by injection molding.

The worker sets each component of the stud portion 110, the plug 122, and the ball seat 123 into a not-shown mold for molding the housing 120. In this case, the worker sets each component into the mold in a state of the ball portion 114 of the stud portion 110 being rotatably and slidably held in the ball seat 123.

Next, the worker casts aluminum alloy into the mold in which each of the stud portion 110, the plug 122, and the ball seat 123 is set (aluminum die casting). In this manner, the housing 120 integrally including the stud portion 110, the plug 122, and the ball seat 123 is molded. Note that in the present embodiment, the housing 120 is molded in a state of the not-shown arm portion extending in the bar shape being formed integrally with the outer peripheral portion of the housing 120. Alternatively, after the housing 120 has been molded alone without casting together with the stud portion 110, the plug 122, and the ball seat 123, each of the stud portion 110, the plug 122, and the ball seat 123 may be assembled thereto.

Next, the worker attaches the dust cover 124 to the housing 120 including the stud portion 110, the plug 122, and the ball seat 123. Specifically, the worker prepares each of the dust cover 124 and the circlip 125. Thereafter, the worker fits the one (on the upper side in the figure) opening of the dust cover 124 onto an outer peripheral portion of the ball support portion 119 of the stud portion 110. In addition, the worker fits the other (on the lower side in the figure) opening of the dust cover 124 onto the cover receiving portion 120a of the housing 120.

Then, the worker fits the circlip 125 onto the outer peripheral surface of the dust cover 124. By such attachment of the dust cover 124 to the housing 120, the ball joint 100 is completed. Note that the worker can apply the not-shown grease to a portion of the stud portion 110 between the ball portion 114 and the plug 122, the inner peripheral surface of the ball seat 123, and the outer peripheral surface of the ball portion 114 exposed through the opening of the housing 120 upon casting of the housing 120 and attachment of the dust cover 124. In this manner, the ball portion 114 can be smoothly rotated and slid.

### (Assembly of Ball Joint 100)

Assembly of the ball joint 100 configured as described above to the coupling target 10 will be described. Note that in the description of steps of assembling the ball joint 100, the description of manufacturing steps which do not directly relate to the present invention will be omitted as necessary.

The worker causes the coupling portion 111 of the stud portion 110 to pass through the through-hole 11 of the coupling target 10. Thereafter, the worker fastens the attachment nut 12 to the external thread portion 112. In this manner, the worker can attach the stud portion 110 of the ball joint 100 to the coupling target 10. In this case, when the coupling portion 111 penetrates the through-hole 11, an edge portion of the through-hole 11 may collide with the boundary portion 117 of the stud portion 110. Moreover, tensile force due to fastening of the attachment nut 12 may act on the boundary portion 117. However, the surface hardening layer 118 formed on the boundary portion 117 reduces damage to the boundary portion 117.

The coupling target 10 is strongly pressed against the flange-shaped receiving portion 115. Thus, an outer edge portion of the flange-shaped receiving portion 115 (coupling-portion-side surface 115a) is strongly pressed against the surface of the coupling target 10. Then, shear force acts on this outer edge portion. In addition, this outer edge portion sinks into the coupling target 10. Thus, a deformed portion 13 formed in such a manner that part of the surface layer of the coupling target 10 is plastically deformed so as to bulge in a circular ring shape closely contacts the outer peripheral portion 115c. However, the surface hardening layer 116 is formed on the outer peripheral portion 115c of the flange-shaped receiving portion 115. Thus, damage such as plastic deformation of the portion with which the coupling target 10 strongly closely contacts can be reduced. With the corrugated surface of the surface hardening layer 116, the flange-shaped receiving portion 115 can improve friction resistance on and adhesion to the coupling target 10.

The worker couples the housing 120 to other components of the not-shown steering mechanism or suspension mechanism via the arm portion (not shown) extending from the housing 120. In this manner, the worker can attach the ball joint 100 to the steering mechanism or the suspension mechanism.

### (Operation of Ball Joint 100)

Operation of the ball joint 100 configured as described above will be described. The ball joint 100 is used as the joint member in the suspension mechanism or the steering mechanism in the not-shown vehicle. While the vehicle is running, a load corresponding to the behavior of wheels or the posture of the vehicle acts on the ball joint 100. Specifically, various types of stress such as bending, tensile, compression, or shear stress and vibration act on the ball joint 100.

In this case, vibration also acts on the outer peripheral portion 115c and boundary portion 117 of the ball joint 100 due to the above-described load. However, the surface hardening layers 116, 118 are formed on the outer peripheral portion 115c and the boundary portion 117, respectively. This reduces damage.

As can be seen from the description of the operation method above, according to the above-described embodiment, the ball joint 100 is formed with the surface hardening layers 116, 118 on the outer peripheral portion 115c and the boundary portion 117. Thus, the stiffness of these portions can be improved. Moreover, in the ball joint 100, the stiffness of the outer peripheral portion 115c and the boundary portion 117 can be improved. This can decrease the outer diameter of the entirety of the stud portion 110. In this manner, the stud portion 110 can be reduced in size.

Further, implementation of the present invention is not limited to the above-described embodiment. Various changes can be made without departing from the object of the present invention. Note that in each modification described below, components similar to those of the embodiment above are denoted by corresponding reference numerals. The description thereof will be omitted.

For example, in the above-described embodiment, in the ball joint 100, the surface hardening layers 116, 118 are formed on the outer peripheral portion 115c and the boundary portion 117, respectively. However, the ball joint 100 is only required to be configured such that the surface hardening layer 118 is formed at least on the boundary portion 117. Note that in the ball joint 100, in a case where it is not necessary to form the surface hardening layer 118 on the boundary portion 117, but it is necessary to form the surface hardening layer 116 on the outer peripheral portion 115c of the flange-shaped receiving portion 115, the surface hardening layer 118 formed on the boundary portion 117 may be omitted. In this manner, the surface hardening layer 116 can be formed on the outer peripheral portion 115c of the flange-shaped receiving portion 115.

In the above-described embodiment, the worker masks part (coupling-portion-side surface 115a and ball-portion-side surface 115b of the flange-shaped receiving portion 115) of the stud portion 110 in the surface hardening layer formation step, and then performs shot peening. However, in the surface hardening layer formation step, shot peening is only required to be performed at least on the outer peripheral portion 115c and the boundary portion 117.

Thus, in the surface hardening layer formation step, the surface hardening layer 116, 118 may be formed on the surface layer of the entirety of the stud portion 110 by performing shot peening on the entirety of the stud portion 110. In this case, in the surface hardening layer formation step, the worker may mask a portion other than the flange-shaped receiving portion 115, and then perform shot peening. In this manner, the surface hardening layer 116, 118 may be formed only on the surface layer of the flange-shaped receiving portion 115. Alternatively, in the surface hardening layer formation step, shot peening may be partially performed on the outer peripheral portion 115c, the boundary portion 117, and the like with a nozzle for spraying a medium.

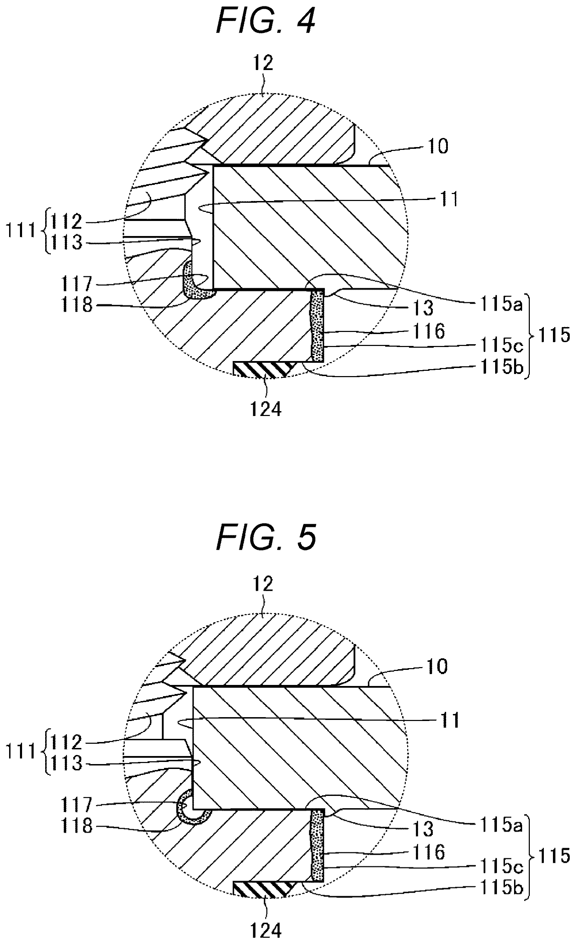

In the above-described embodiment, the boundary portion 117 is configured such that the unthreaded portion 113 and the flange-shaped receiving portion 115 are connected to each other substantially at right angle. However, as shown in Fig. 4, the boundary portion 117 may be configured such that the unthreaded portion 113 and the flange-shaped receiving portion 115 are connected to each other through a curved surface. Alternatively, as shown in Fig. 5, the boundary portion 117 may be formed such that an intersection between an extension of the unthreaded portion 113 and an extension of the flange-shaped receiving portion 115 is recessed inward of the stud portion 110. In this case, in the ball joint 100, the surface hardening layer 118 is formed on the recessed boundary portion 117. Thus, the stiffness of the stud portion 110 can be ensured while the adhesion to the coupling target 10 is improved.

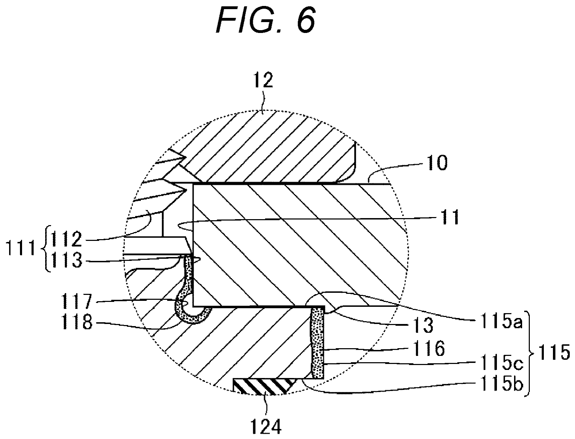

Note that in this case, the surface hardening layer 118 may be formed only on the inner surface of the recessed boundary portion 117. Alternatively, the surface hardening layer 118 may be formed up to an outer peripheral portion (unthreaded portion 113 and coupling-portion-side surface 115a) of the boundary portion 117. Particularly, in a case where the coupling target 10 is fitted onto the unthreaded portion 113 of the coupling portion 111 with the inner peripheral surface of the through-hole 11 of the coupling target 10 contacting such a portion, the durability of the unthreaded portion 113 can be improved by the surface hardening layer 118 formed so as to extend over the surface layer of the unthreaded portion 113, as shown in Fig. 6.

In the above-described embodiment, the coupling portion 111, the ball portion 114, the flange-shaped receiving portion 115, and the ball support portion 119 made of the same material are integrally molded to form the stud portion 110. However, the coupling portion 111, the ball portion 114, the flange-shaped receiving portion 115, and the ball support portion 119 made of the same material are integrally molded to form the stud portion 110. However, the stud portion 110 may be formed in such a manner that the ball portion 114 separately molded is joined to the ball support portion 119 by welding or the like.

In the above-described embodiment, in the surface hardening layer formation step, the surface hardening layers 116, 118 are formed on the outer peripheral portion 115c and the boundary portion 117 by shot peening. However, in the surface hardening layer formation step, the surface hardening layers 116, 118 are only required to be formed on the outer peripheral portion 115c and the boundary portion 117 on the surface hardening layers 116, 118. That is, shot peening is not necessarily employed. Thus, in the surface hardening layer formation step, instead of shot peening, the surface hardening layers 116, 118 may be formed on the outer peripheral portion 115c and the boundary portion 117 by other types of surface hardening treatment (for example, various types of thermal treatment such as induction hardening or flame hardening, nitriding, or carburizing).

In the above-described embodiment, the surface hardening layer formation step is executed before the thread portion molding step. However, the surface hardening layer formation step may be performed after the thread portion molding step. In this case, the thread portion molding step is preferably performed before the thermal treatment step. Note that the thread portion molding step may be executed after the thermal treatment step. In the thread portion molding step, the external thread may be formed by machining other than rolling, such as cutting.

### LIST OF REFERENCE NUMBERS

- 10: Coupling Target
- 11: Through-Hole
- 12: Attachment Nut
- 100: Ball Joint
- 110: Stud Portion
- 111: Coupling Portion
- 112: External Thread Portion
- 113: Unthreaded Portion
- 114: Ball Portion
- 115: Flange-Shaped Receiving Portion
- 115a: Coupling-Portion-Side Surface
- 115b: Ball-Portion-Side Surface
- 115c: Outer Peripheral Portion
- 116: Surface Hardening Layer
- 117: Boundary Portion
- 118: Surface Hardening Layer
- 119: Ball Support Portion
- 119a: Constricted Portion
- 120: Housing
- 120a: Cover Receiving Portion
- 121: Opening
- 122: Plug
- 123: Ball Seat
- 124: Dust Cover
- 125: Circlip

## Claims

1. A ball joint comprising:
a stud portion having a coupling portion to be coupled to a coupling target, formed in a bar shape, and having a flange-shaped receiving portion which projects in a flange shape between the stud portion and a ball portion formed with a spherical surface, and on which the coupling target is to be located; and
a housing slidably housing the ball portion of the stud portion,
wherein a surface hardening layer is formed on a boundary portion between the coupling portion and the flange-shaped receiving portion.

2. The ball joint according to claim 1, wherein
the surface hardening layer includes a shot peening mark.

3. The ball joint according to claim 1, wherein
the boundary portion is formed so as to be recessed inward of the stud portion, and
the surface hardening layer is formed on a surface of the recessed boundary portion.

4. The ball joint according to claim 1, wherein
a surface hardening layer is further formed on an outer peripheral portion of the flange-shaped receiving portion.

5. A method for manufacturing a ball joint including a stud portion having a coupling portion to be coupled to a coupling target, formed in a bar shape, and having a flange-shaped receiving portion which projects in a flange shape between the stud portion and a ball portion formed with a spherical surface, and on which the coupling target is to be located, and a housing slidably housing the ball portion of the stud portion, the method comprising:
a surface hardening layer formation step of forming a surface hardening layer on a boundary portion between the coupling portion and the flange-shaped receiving portion.

6. The method for manufacturing the ball joint according to claim 5, wherein
the surface hardening layer formation step is shot peening.

7. The method for manufacturing the ball joint according to claim 6, further comprising:
a thread portion molding step of forming an external thread at the coupling portion,
wherein the surface hardening layer formation step is performed before the thread portion molding step.

8. The method for manufacturing the ball joint according to claim 5, wherein
in the surface hardening layer formation step, a surface hardening layer is also formed on an outer peripheral portion of the flange-shaped receiving portion.
